# EUROPÄISCHE PATENTANMELDUNG

(11) **EP 1 164 762 A1**
(43) Veröffentlichungstag der Anmeldung: **19.12.2001**
(21) Anmeldenummer: 00810523.1
(22) Anmeldetag: 16.06.2000
(51) Int. Cl.: H04L 27/26

(54) **Breitbandmodulationsverfahren**

(71) Anmelder: ABB RESEARCH LTD., 8050 Zürich (CH)
(72) Erfinder: Dzung, Dacfey, 5430 Wettingen (CH)
(74) Vertreter: ABB Patent Attorneys

(57) **Zusammenfassung**

Die vorliegende Erfindung hat ein Breitbandmodulationsverfahren zum Gegenstand, welches dann eingesetzt wird, falls ein Frequenzbereich (B) infolge besetzter schmalbandiger Kanäle (EFR₁) in unzusammenhängende Teilfrequenzbereiche zerfällt. Das erfindungsgemässe Verfahren erlaubt eine direkte Ausnutzung des zur Verfügung stehenden Frequenzbereichs, indem es die besetzten Frequenzen ohne hardwaremässigen Mehraufwand ausschliesst. Der Frequenzbereich (B) wird in N Unterkanäle (SCₙ) aufgeteilt, wobei die Träger derjenigen Unterkanäle (SC₂), welche besetzte Frequenzen (EFR₁) umfassen, nicht moduliert werden. Das Verfahren ist insbesondere geeignet zur Kommunikation über Stromversorgungsnetze auf Hochspannungsebene.

## Beschreibung

### TECHNISCHES GEBIET

Die vorliegende Erfindung bezieht sich auf das Gebiet der Datenübertragung über Stromversorgungsnetze. Sie betrifft ein Breitbandmodulationsverfahren gemäss dem Oberbegriff des Patentanspruchs 1.

### STAND DER TECHNIK

Bei bekannten Datenübertragungssystemen für beschränkte Datenmengen werden Kanäle mit schmalen Bandbreiten benutzt. Beispielsweise ist für derartige Kommunikationssysteme, welche mit Stromversorgungsnetzen auf Hochspannungsebene als physikalischem Trägermedium operieren, die Bandbreite eines Kanals ≈ 4 kHz bei einer Trägerfrequenz von ≈ 300 kHz. In bestehenden Stromversorgungsnetzwerken sind bereits einige derartige Kanäle implementiert und die dazugehörigen Frequenzbereiche somit belegt.

Breitband-Kommunikationssysteme mit hohen Datenraten sind auf Kanäle mit grossen Bandbreiten, d.h. einen grossen zusammenhängenden Frequenzbereich, angewiesen. Demzufolge müssen für neu einzurichtende Übertragungssysteme neue Frequenzen erschlossen werden, oder es müssen in einer Frequenzumgebung mit besetzten Frequenzen beziehungsweise bestehenden Kanälen Letzteren neue Trägerfrequenzen zugewiesen werden. Dies ist aber aus technischen oder administrativen Gründen oft nicht möglich.

Sind mehrere Frequenzbereiche zugänglich, welche aber unter sich durch besetzte Kanäle getrennt sind, kann in jedem zusammenhängenden Bereich ein separates Übertragungssystem installiert werden. Dies führt zu einer optimalen Übertragungsrate, bedingt aber einen erheblichen hardwaremässigen Mehraufwand.

Für Breitband-Übertragungssysteme mit einem zusammenhängenden oder kontinuierlichen Frequenzbereich sind verschiedene Mehrträgermodulationsverfahren (multicarrier modulation MCM) bekannt, beispielsweise OFDM (orthogonal frequency division multiplexing), OM-QAM (orthogonally multiplexed quadrature amplitude modulation) oder ein DMT genanntes Modulationsverfahren (discrete multitone transmission), welche bevorzugterweise eine inverse Fast Fouriertransformation (IFFT inverse fast fourier transform) zum Übergang zwischen Frequenz- und Zeitdarstellung verwenden.

Falls die Qualität der Übertragungskanäle in einem Mehrkanal- oder Mehrträgermodulationsverfahren nicht bekannt ist oder zeitlichen Änderungen unterworfen ist, bietet sich ein adaptives Verfahren zur Datenübertragung an, wie es im deutschen Patent DE 198 50 050 C1 offenbart ist. Dabei werden abhängig von den Übertragungseigenschaften die Modulationsverfahren laufend angepasst.

### DARSTELLUNG DER ERFINDUNG

Aufgabe der vorliegenden Erfindung ist es, ein wirtschaftliches Breitbandmodulationsverfahren für einen Übertragungskanal mit einem diskontinuierlichen Frequenzbereich anzugeben. Diese Aufgabe wird durch ein Verfahren mit den Merkmalen des Patentanspruchs 1 gelöst.

Kern der Erfindung ist es, den Übertragungskanal in mehrere Unterkanäle aufzuteilen und nur die Träger derjenigen Unterkanäle zu modulieren, welche in ihrem jeweiligen Unterkanalfrequenzbereich keine gesperrten oder besetzten Frequenzen aufweisen. Dadurch kann eine parallele Realisierung mit separaten Hardwarekomponenten für jeden erlaubten Frequenzbereich vermieden werden.

In einer bevorzugten Ausführungsform wird durch inverse Fouriertransformation ein Modulationsvektor aus einer Frequenzdarstellung in ein zeitabhängiges Symbol übergeführt. Diejenigen Elemente des Vektors, welche den gesperrten Unterkanälen zugeordnet sind, werden identisch auf Null gesetzt.

Bevorzugterweise wird das Verfahren für die Kommunikation über ein Stromversorgungsnetz eingesetzt.

Im Rahmen der vorliegenden Erfindung werden alle zugänglichen Frequenzbereiche zu einem einzigen Übertragungskanal zusammengefasst und nicht getrennt betrachtet. Die zwischen zwei zugänglichen Frequenzbereichen sich befindenden gesperrten Bereiche werden von der Übertragung mittels des erfindungsgemässen Modulationsverfahrens ohne hardwaremässigen Mehraufwand ausgeschlossen. Die Erfindung gestattet eine flexible und direkte Konfigurierung eines unzusammenhängenden Frequenzbandes sowie dessen optimale Ausnutzung zur Datenübertragung.

Weitere vorteilhafte Ausführungsformen gehen aus den abhängigen Patentansprüchen hervor.

### KURZE BESCHREIBUNG DER FIGUREN

Nachfolgend wird die Erfindung anhand von Ausführungsbeispielen im Zusammenhang mit den Zeichnungen näher erläutert. Es zeigen
Fig.1 ein Frequenzspektrum mit einer nutzbaren Bandbreite B,
Fig.2 die Komponenten eines Senders und
Fig.3 die vom Sender erfindungsgemäss ausgeführten Schritte.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

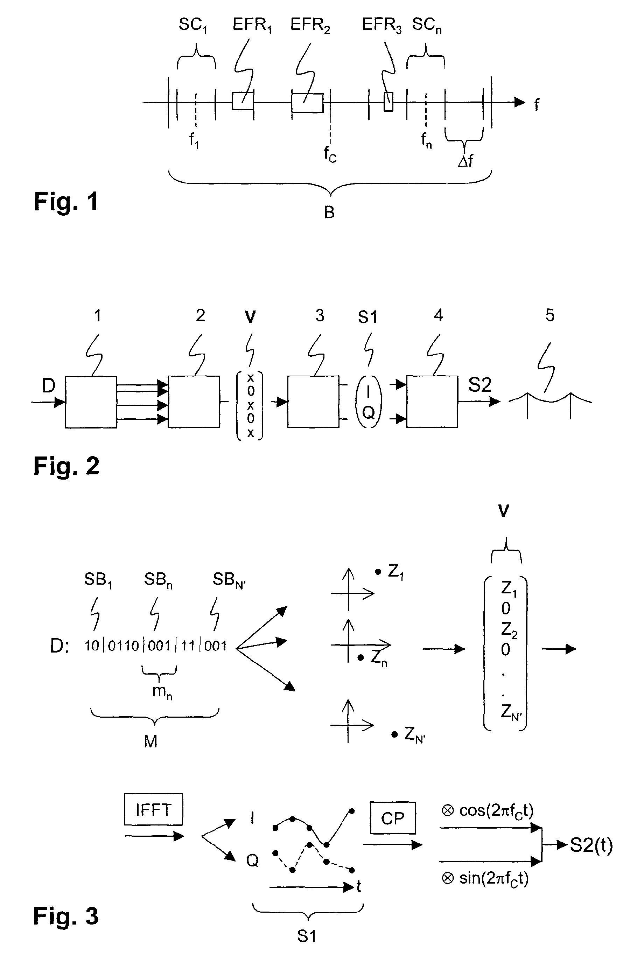

In Fig.1 ist ein Frequenzbereich der Bandbreite B gezeigt, welcher für die Datenübertragung genutzt werden soll. Innerhalb des Bereiches liegen drei Frequenzbereiche EFR₁, EFR₂ und EFR₃ (excluded frequency range), welche schon anderweitig genutzt werden und für die Datenübertragung nicht zur Verfügung stehen. Der Bereich B ist unterteilt in N Unterkanäle (sub-channels) SC₁ - SC_{N} mit jeweils einem Träger der Trägerfrequenz fₙ. Gewisse Frequenzen am Rand des Frequenzbereichs B sind möglicherweise keinem Unterkanal zugeordnet. Die Vereinigung aller Unterkanäle SC₁ - SC_{N} bildet den Übertragungskanal C, dessen tatsächlich genutzte Bandbreite f_{S} ≤ B ist und dessen arithmetische Mittenfrequenz mit f_{C} bezeichnet wird. Falls die Trägerfrequenzen f₁ - f_{N} der Unterkanäle SC₁ - SC_{N} äquidistant sind, bestimmt der kleinste nutzbare Abstand zwischen zwei ausgeschlossenen Bereichen die Unterkanalbandbreite Δf und es gilt f_{S} = N · Δf. Selbstverständlich sind noch andere Kriterien zu berücksichtigen, so ist es von Vorteil, wenn die Gesamtzahl N der Unterkanäle einer Potenz von 2 entspricht. Allgemein gilt es ein Optimum zu finden zwischen der Anzahl Unterkanäle, deren Bandbreiten und der Anzahl derjenigen Unterkanäle, welche besetzte Frequenzen umfassen. Im dargestellten Beispiel der Fig.1 sind von den insgesamt N = 8 Unterkanälen die Unterkanäle 2,4,6 besetzt, es stehen also noch N' = 5 Unterkanäle für die Datenübertragung zur Verfügung.

In Fig.2 ist schematisch der Aufbau eines Senders zur Übertragung von Daten D mittels eines erfindungsgemässen Verfahrens dargestellt. Der Sender umfasst einen Konvertierer 1 (serial to parallel converter), einen Modulator 2, eine weitere, Transformierer genannte Einheit 3 sowie einen Mixer 4, von demjenigen ausgehend ein Signal S über das physikalische Trägermedium 5, beispielsweise ein Stromversorgungsleitung, übertragen wird. Alle genannten Einheiten sind im Wesentlichen durch ihre im Folgenden beschriebenen und in Fig.3 veranschaulichten Funktionen definiert, wobei die Einheiten 1-3 auch in den eingangs genannten Verfahren sinngemäss zum Einsatz kommen. Die einzelnen Funktionen brauchen nicht in unterschiedlichen physikalischen Komponenten realisiert zu sein, sondern können in nur einem Bauteil verwirklicht sein oder von einem Mikroprozessor ausgeführt werden.

Die zu übertragenden Daten D werden in serieller Form, d.h. ein Bit nach dem anderen, in den Konvertierer 1 eingelesen. Ein Datenblock aus M Bits wird in N' Unterblöcke (sub-blocks) SBₙ mit jeweils einer Bitlänge mₙ aufgeteilt (n = 1 - N'). Diese Unterblöcke SBₙ werden daraufhin im Modulator 2 parallel weiterverarbeitet.

Jeder Unterblock SBₙ beziehungsweise seine mₙ-stelligen Bitfolge wird dabei in eineindeutiger Weise auf eine Untermenge der komplexen Zahlen abgebildet. Dem Unterblock wird also eine ihn kodierende komplexe Zahl Zₙ zugeordnet, welche in einer Frequenzdarstellung proportional zu einer Amplitude oder einem anderen zu modulierenden Parameter des Trägers des n-ten Unterkanals SCₙ ist. Erfindungsgemäss wird den gesperrten Unterkanälen die Amplitude Null zugeordnet, so dass pro Datenblock ein N-elementiger Modulationsvektor **V** mit N' von Null verschiedenen Elementen Zₙ mit N' < N bestimmt wird. Dieser Vektor **V** wird anschliessend transformiert und weiter umgeformt, so dass ein einziges zeitabhängiges Signal S2(t) erhalten wird.

Auf der Empfängerseite wird sinngemäss in umgekehrter Reihenfolge verfahren. Das empfangene Signal S2 wird zuerst in die Frequenzdarstellung zurücktransformiert, worauf aus den zu den einzelnen Trägerfrequenzen gehörigen Amplituden die den Unterblöcken entsprechenden Bitfolgen dekodiert werden.

Im Folgenden wird vereinfachend davon ausgegangen, dass die Unterkanalträgerfrequenzen fₙ äquidistant sind und alle Unterblöcke dieselbe Anzahl Bits aufweisen, d.h. dass mₙ = m ist. Die erwähnte Transformation ist bevorzugterweise eine inverse Fouriertransformation (IFFT) und erzeugt ein komplexwertiges zeitabhängiges DMT-Symbol S1 mit Realteil Q und Imaginärteil I. Dieses Symbol S1 entspricht einer Superposition modulierter Unterkanäle und besteht aus N diskreten Punkten, welche einen zeitlichen Abstand von T_{S} aufweisen. Dieser Abstand ist gleich einer inversen Abtastrate und entspricht wiederum dem Kehrwert der Bandbreite 1/fₛ des Übertragungskanals C. Jedes einem Datenblock des zu übertragenden Datenstromes entsprechende Symbol S1 weist also eine Länge N·T_{S} auf und kann weiter durch einen zyklischen Vorspann (cyclic prefix CP) ergänzt werden. Die Länge des zyklischen Vorspanns CP sollte gleich der Länge einer Stossantwort des Übertragungskanals C sein. Dies gewährleistet die Orthogonalität der modulierten Unterkanäle und erleichtert dem Empfänger die Synchronisation und die Rekonstruktion der übertragenen Daten aus dem empfangenen Signal.

Das durch die genannte Transformation erhaltene Symbol S1 muss in der Folge noch auf einen Parameter wie Amplitude, Phase oder Frequenz eines Trägers abgebildet werden. Bei einer Quadraturamplitudenmodulation beispielsweise geschieht eine Verschiebung hin zur Mittenfrequenz f_{c} des Übertragungskanals C durch einen I/Q-Mixer. Dieser erzeugt aus dem komplexwertigen Symbol S1 durch Multiplikation mit einem Träger der Mittenfrequenz f_{c}, d.h. mit cos(2πf_{c}t) beziehungsweise sin(2πf_{c}t), und anschliessender Addition das zu übertragende, reellwertige, zeitkontinuierliche Signal S2(t). Im Gegensatz zum Bereich der Radiofrequenzen ist dieser Vorgang dank der tiefen Trägerfrequenz f_{c} wie alle vorangehenden Schritte auch digital möglich. Dazu ist aber ein Erhöhung der Abtastrate durch ein Interpolationsverfahren (upsampling) auf einen Wert fₛ' > 2f_{c} unumgänglich.

Die durch den Modulator 2 vorgenommene Modulation geschieht vorzugsweise gemäss dem 2^{m}-QAM Format. Die komplexe Zahl Zₙ wird dabei aus 2^{m} diskreten Punkten (constellation points) gewählt. Um frequenzabhängigen Störungen entgegenzuwirken, können von Unterkanal zu Unterkanal variierende Verstärkungsfaktoren vorgesehen werden.

Für ein Kommunikationssystem über ein Stromversorgungsnetz (power line communication PLC) auf Hochspannungsebene sind f_{c} = 240 kHz, B = 128 kHz und eine erhöhte Abtastrate von fₛ' = 2.048 MHz typische Werte. Für die erwähnte 2^{m}-QAM Modulationsart ist m = 4 ein typischer Wert, welcher aber je nach dem zu erwartenden Rauschniveau angepasst werden kann. Das dargestellte Übertragungsverfahren ist aber nicht auf Hochspannungsnetzwerke beschränkt, sondern kann beispielsweise auch für einen "last-mile" Internetzugang über das Niederspannungsverteilnetzwerk zum Einsatz kommen.

### BEZUGSZEICHENLISTE

- 1: Konvertierer
- 2: Modulator
- 3: Transformierer
- 4: Mixer
- 5: Trägermedium
- C: Übertragungskanal (communication channel)
- f_{c}: Mittenfrequenz des Übertragungskanals
- EFR: gesperrter Frequenzbereich (excluded frequency range)
- SCₙ: Unterkanal (sub-channel)
- fₙ: Trägerfrequenz
- Δf: Unterkanalbandbreite
- SBₙ: Unterblock (sub-block)
- mₙ: Bitlänge
- S1: komplexwertiges Symbol
- S2: reellwertiges Signal

## Patentansprüche

1. Breitbandmodulationsverfahren zur Übertragung von Daten über einen Übertragungskanal (C), welcher mindestens einen für die Übertragung nicht-zugänglichen Frequenzbereich (EFR₁) umfasst,
**dadurch gekennzeichnet, dass** der Übertragungskanal (C) in N Unterkanäle (SCₙ) mit je einem Träger der Trägerfrequenz (fₙ) aufgeteilt wird, und dass der Träger des mindestens einen Unterkanals (SC₂), welcher den mindestens einen für die Übertragung nicht-zugänglichen Frequenzbereich (EFR₁) umfasst, nicht moduliert wird.

2. Verfahren nach Anspruch 1, **dadurch gekennzeichnet, dass** die Trägerfrequenzen (fₙ) äquidistant sind und eine Bandbreite (Δf) der Unterkanäle (SCₙ) konstant ist.

3. Verfahren nach Anspruch 1, **dadurch gekennzeichnet, dass** die Datenübertragung über ein Stromversorgungsnetz (5) auf Hochspannungsebene erfolgt.

4. Verfahren nach Anspruch 1, wobei von einem zu übertragenden Datenblock N' Unterblöcke gebildet werden und jedem Unterblock (SBₙ) eine komplexe Zahl (Zₙ) zugeordnet wird, welche ein Element eines Vektors (**V**) bildet, wobei jedes der N Elemente des Vektors (**V**) einem der N Unterkanäle (SCₙ) zugeordnet ist und der Vektor (**V**) durch eine geeignete Transformation in ein zeitabhängiges Symbol (S1) übergeführt wird, **dadurch gekennzeichnet, dass** den Elementen des Vektors (**V**), welche dem mindestens einen gesperrten Unterkanal (SC₂) entsprechen, der Wert Null zugewiesen wird.

5. Verfahren nach Anspruch 4, wobei der Übertragungskanal (C) eine Mittenfrequenz (f_{c}) umfasst, **dadurch gekennzeichnet, dass** das Symbol (S1) zur Modulation eines Trägers mit der Mittenfrequenz (f_{c}) verwendet wird.

6. Verfahren nach Anspruch 4, **dadurch gekennzeichnet, dass** der Abstand (Δf) der Trägerfrequenzen (fₙ) der Unterkanäle (SCₙ) konstant ist und die Transformation eine inverse Fouriertransformation (IFFT) ist.

7. Verfahren nach Anspruch 4, **dadurch gekennzeichnet, dass** das Symbol (S1) durch einen zyklischen Vorspann (CP) ergänzt wird.

8. Verfahren nach Anspruch 4, **dadurch gekennzeichnet, dass** die Unterblöcke (SBₙ) die gleiche Länge (m) haben.

9. Verfahren nach Anspruch 7, **dadurch gekennzeichnet, dass** die Zuordnung der komplexen Zahlen (Zₙ) zu den Unterblökken (SBₙ) eine 2^{m}-QAM ist.

10. Vorrichtung zur Datenübertragung gemäss einem Verfahren nach einem der vorangegangenen Ansprüche, mit einem Sender und einem Übertragungskanal (C), welcher mindestens einen für die Übertragung gesperrten Frequenzbereich (EFR1) umfasst,
**dadurch gekennzeichnet, dass** der Übertragungskanal (C) in N Unterkanäle (SCₙ) mit je einem Träger der Trägerfrequenz (fₙ) aufgeteilt ist, und dass der Träger des mindestens einen Unterkanals (SC₂), welcher den mindestens einen für die Übertragung nicht-zugänglichen Frequenzbereich (EFR₁) umfasst, nicht moduliert ist.
